(19) **Europäisches Patentamt**

**European Patent Office**

**Office européen des brevets**

(11) **EP 1 367 740 B1**

(12) **EUROPEAN PATENT SPECIFICATION**

(45) Date of publication and mention
of the grant of the patent:
**24.08.2005 Bulletin 2005/34**

(51) Int Cl.⁷: **H04B 7/005**

(21) Application number: **03019004.5**

(22) Date of filing: **22.03.2000**

(54) **Outer loop/weighted open loop power control in a time division duplex communication system**

Leistungsregelung mit äusserer Schleife/gewichteter offener Schleife in einem
Zeitduplexkommunikationssystem

Commande de puissance en boucle externe / boucle ouverte pondérée dans un système de
communication duplex à division dans le temps

(84) Designated Contracting States:
**AT BE CH CY DE DK ES FI FR GB GR IE IT LI LU
MC NL PT SE**

(30) Priority: **22.03.1999 US 125417 P**
**28.05.1999 US 136556 P**
**28.05.1999 US 136557 P**

(43) Date of publication of application:
**03.12.2003 Bulletin 2003/49**

(60) Divisional application:
**05103710.9**

(62) Document number(s) of the earlier application(s) in
accordance with Art. 76 EPC:
**00916600.0 / 1 163 735**

(73) Proprietor: **INTERDIGITAL TECHNOLOGY
CORPORATION**
**Wilmington, DE 19801 (US)**

(72) Inventors:
• **Zeira, Ariela**
  **Trumball, CT 06611 (US)**
• **Dick, Steven G.**
  **Nesconset, NY 11767 (US)**
• **Shin, Sung-Hyuk**
  **Fort Lee, NJ 07024 (US)**

(74) Representative: **Henningsson, Gunnar**
**AWAPATENT AB,**
**Box 45086**
**104 30 Stockholm (SE)**

(56) References cited:
**EP-A- 0 462 952**      **EP-A- 0 682 419**
**WO-A-97/49197**        **WO-A-98/45962**
**US-A- 5 542 111**

**Description**

**BACKGROUND**

This invention generally relates to spread spectrum time division duplex (TDD) communication systems. More particularly; the present invention relates to a spread spectrum time division duplex user equipment comprising means for controlling transmission power.

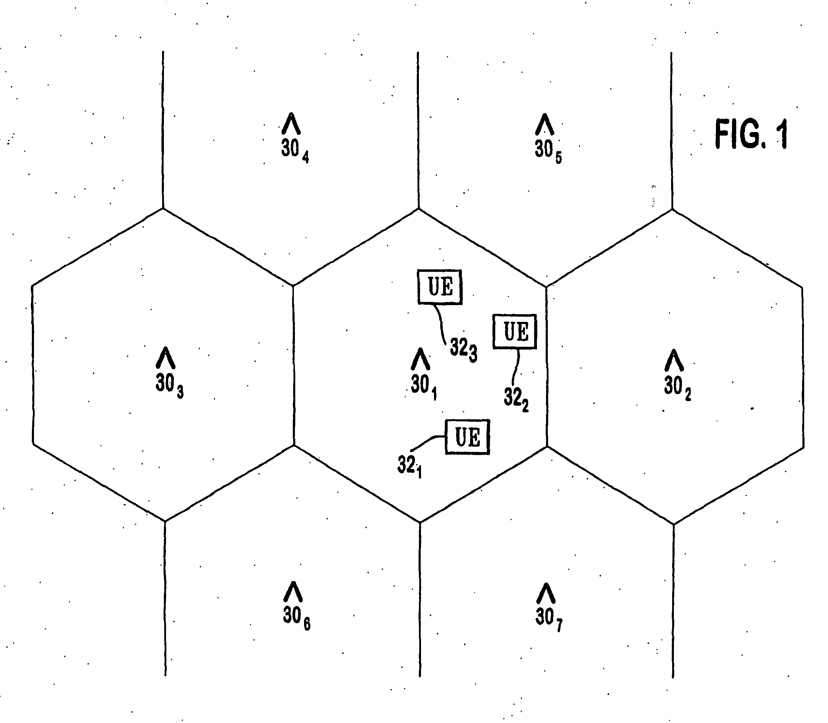

**Figure 1** depicts a wireless spread spectrum time division duplex (TDD) communication system. The system has a plurality of base stations $30_1$-$30_7$. Each base station $30_1$ communicates with user equipment (UEs) $32_1$-$32_3$ in its operating area. Communications transmitted from a base station $30_1$ to a UE $32_1$ are referred to as downlink communications and communications transmitted from a UE $32_1$ to a base station $30_1$ are referred to as uplink communications.

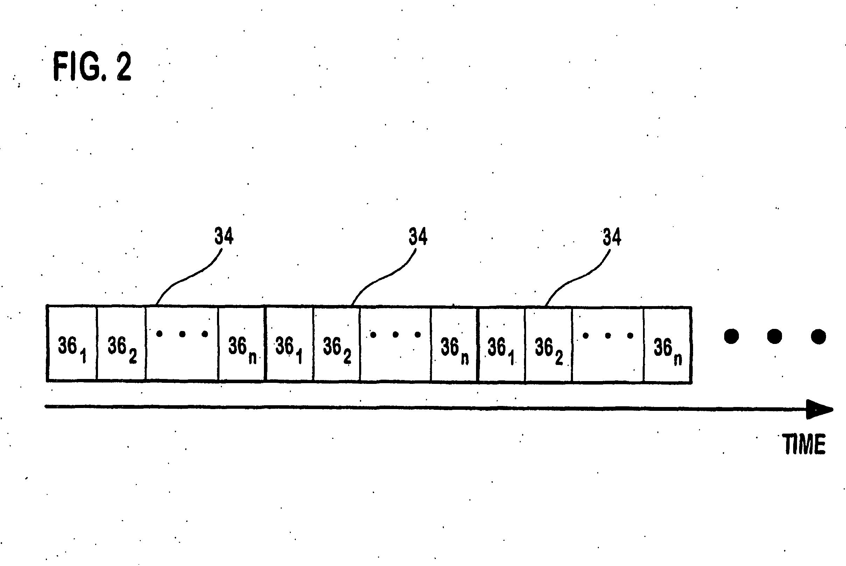

In addition to communicating over different frequency spectrums, spread spectrum TDD systems carry multiple communications over the same spectrum. The multiple signals are distinguished by their respective chip code sequences (codes). Also, to more efficiently use the spread spectrum, TDD systems as illustrated in **Figure 2** use repeating frames **34** divided into a number of time slots $36_1$-$36_n$, such as sixteen time slots. In such systems, a communication is sent in selected time slots $36_1$-$36_n$ using selected codes. Accordingly, one frame **34** is capable of carrying multiple communications distinguished by both time slot and code. The combination of a single code in a single time slot is referred to as a resource unit. Based on the bandwidth required to support a communication, one or multiple resource units are assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach using transmission power control in a code division multiple access (CDMA) communication system is described in U.S. Patent No. 5,056,109 (Gilhousen et al.). A transmitter sends a communication to a particular receiver. Upon reception, the received signal power is measured. The received signal power is compared to a desired received signal power. Based on the comparison, a control bit is sent to the transmitter either increasing or decreasing transmission power by a fixed amount. Since the receiver sends a control signal to the transmitter to control the transmitter's power level, such power control techniques are commonly referred to as closed loop.

The European patent application having publication no 0 462 952 relates to a method of regulating or adjusting the transmission power when transmitting signals between a mobile station a base station in a digital mobile telephony system. The output power is regulated with the intention of constantly maintaining the transmission power at an optimum level, by which is meant that the transmission power is as low as possible such as to prevent unnecessary disturbance of neighbouring channels transmitting information on the same frequency, but sufficiently high for the transmitted information to be interpreted in the receiver.

Under certain conditions, the performance of closed loop systems degrades. For instance, if communications sent between a UE and a base station are in a highly dynamic environment, such as due to the UE moving, such systems may not be able to adapt fast enough to compensate for the changes. The update rate of closed loop power control in TDD is typically 100 cycles per second which is not sufficient for fast fading channels. Accordingly, there is a need for alternate approaches to maintain signal quality and low transmission power levels.

**SUMMARY**

Outer loop/weighted open loop power control controls transmission power levels in a spread spectrum time division duplex communication system. For the user equipment this is achieved with the user equipment of claim 1.

**BRIEF DESCRIPTION OF THE DRAWINGS**

**Figure 1** illustrates a prior art TDD system.
**Figure 2** illustrates time slots in repeating frames of a TDD system.
**Figure 3** is a flow chart of outer loop/weighted open loop power control.
**Figure 4** is a diagram of components of two communication stations using outer loop/weighted open loop power control.

**Figure 5** is a graph of the performance of outer loop/weighted open loop, weighted open loop and closed loop power control systems.

**Figure 6** is a graph of the three systems performance in terms of Block Error Rate (BLER).

**DETAILED DESCRIPTION OF THE PREFERRED EMBODIMENTS**

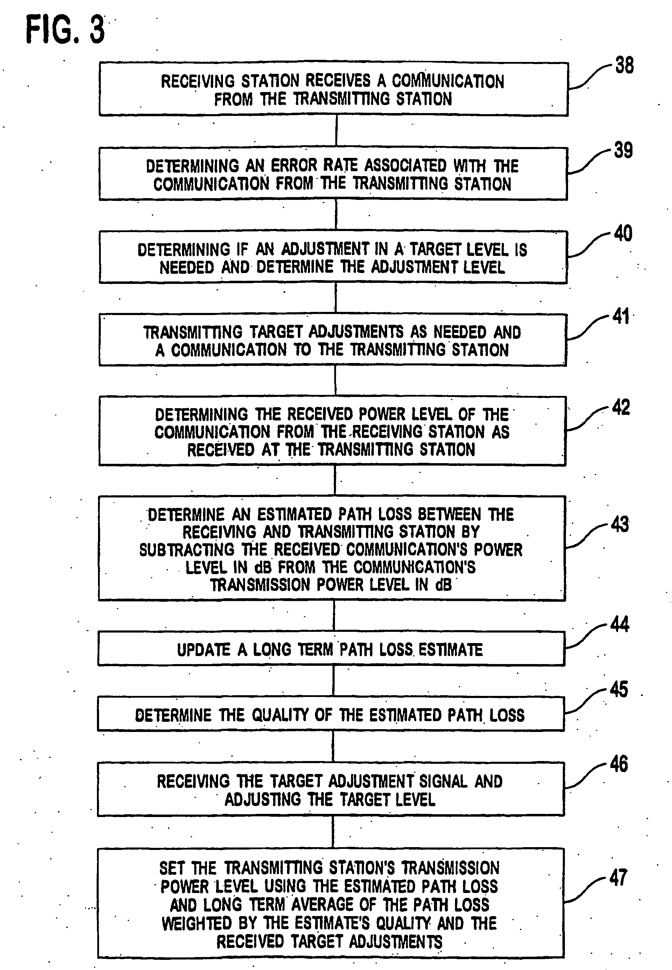

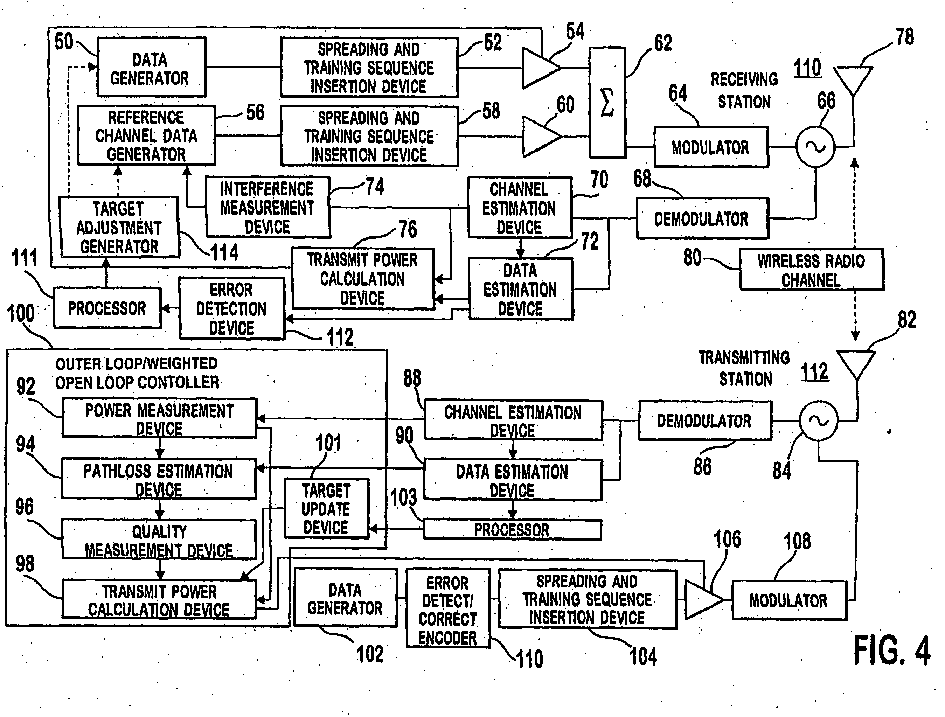

The preferred embodiments will be described with reference to the drawing figures where like numerals represent like elements throughout. Outer loop/weighted open loop power control will be explained using the flow chart of **Figure 3** and the components of two simplified communication stations **110,112** as shown in **Figure 4.** For the following discussion, the communication station having its transmitter's power controlled is referred to as the transmitting station **112** and the communication station receiving power controlled communications is referred to as the receiving station **110**. Since outer loop/weighted open loop power control may be used for uplink, downlink or both types of communications, the transmitter having its power controlled may be associated with the base station **30$_1$,** UE **32$_1$** or both. Accordingly, if both uplink and downlink power control are used, the receiving and transmitting station's components are associated with both the base station **30$_1$** and UE **32$_1$.**

The receiving station **110** receives various radio frequency signals including communications from the transmitting station **112** using an antenna **78,** or alternately, an antenna array, **step 38**. The received signals are passed thorough an isolator **66** to a demodulator **68** to produce a baseband signal. The baseband signal is processed, such as by a channel estimation device **70** and a data estimation device **72,** in the time slots and with the appropriate codes assigned to the transmitting station's communication. The channel estimation device **70** commonly uses the training sequence component in the baseband signal to provide channel information, such as channel impulse responses. The channel information is used by the data estimation device **72,** the interference measurement device **74,** and the transmit power calculation device **76**. The data estimation device **72** recovers data from the channel by estimating soft symbols using the channel information.

Prior to transmission of the communication from the transmitting station **112,** the data signal of the communication is error encoded using an error detection/correction encoder **110.** The error encoding scheme is typically a circular redundancy code (CRC) followed by a forward error correction encoding, although other types of error encoding schemes may be used.

Using the soft symbols produced by the data estimation device **72,** an error detection device **112** detects errors in the soft symbols. A processor **111** analyzes the detected error and determines an error rate for the received communication, **step 39**. Based on the error rate, the processor **111** determines the amount, if any, a target level, such as a target signal to interference ration (SIR$_{TARGET}$),needs to be changed at the transmitting station **112**, **step 40.** Based on the determined amount, a target adjustment signal is generated by the target adjustment generator **114**. The target adjustment is subsequently sent to the transmitting station, **step 41**. The target adjustment is signaled to the transmitting station **112**, such as using a dedicated or a reference channel as shown in **Figure 4, step 41.**

One technique to determine the amount of adjustment in the target level uses an upper and lower threshold. If the determined error rate exceeds an upper threshold, the target level is set at an unacceptably low level and needs to be increased. A target level adjustment signal is sent indicating an increase in the target level. If the determined error rate is below a second threshold, the target level is set at an unnecessarily high level and the target level can be decreased. By reducing the target level, the transmitting station's power level is decreased reducing interference to other communications using the same time slot and spectrum. To improve performance, as soon as the error rate exceeds the upper limit, a target adjustment is sent. As a result, high error rates are improved quickly and lower error rates are adjusted slowly, such as once per 10 seconds. If the error rate is between the thresholds, a target adjustment is not sent maintaining the same target level.

Applying the above technique to a system using CRC and FEC encoding follows. Each CRC block is checked for an error. Each time a frame is determined to have an error, a counter is incremented. As soon as the counter exceeds an upper threshold, such as 1.5 to 2 times the desired block error rate (BLER), a target adjustment is sent increasing the target level. To adjust the SIR$_{TARGET}$ at the transmitting station **112,** the increase in the SIR$_{TARGET}$ is sent (SIR$_{INC}$), which is typically in a range of 0.25 dB to 4 dB. If the number of CRC frames encountered exceeds a predetermined limit, such as 1000 blocks, the value of the counter is compared to a lower threshold, such as 0.2 to 0.6 times the desired BLER. If the number of counted block errors is below the lower threshold, a target adjustment signal is sent decreasing the target level, SIR$_{DEC}$. A typical range of SIR$_{DEC}$ is 0.25 to 4 dB. The value of SIR$_{DEC}$ may be based on SIR$_{INC}$ and a target block error rate, BLER$_{TARGET}$.The BLER$_{TARGET}$ is based on the type of service. A typical range for the BLER$_{TARGET}$ is 0.1% to 10%. **Equation 1** illustrates one such approach for determining SIR$_{DEC}$.

$$SIR_{DEC} = SIR_{INC} \times BLER_{TARGET}/(1 - BLER_{TARGET}) \qquad \text{Equation 1}$$

If the count is between the thresholds for the predetermined block limit, a target adjustment signal is not sent.

Alternately, a single threshold may be used. If the error rate exceeds the threshold, the target level is increased. If the error rate is below the threshold, the target is decreased. Additionally, the target level adjustment signal may have several adjustment levels, such as from 0 dB to $\pm 4$ dB in 0.25 dB increments based on the difference between the determined error rate and the desired error rate.

The interference measurement device **74** of the receiving station **110** determines the interference level in dB, $I_{RS}$, within the channel, based on either the channel information, or the soft symbols generated by the data estimation device **72,** or both. Using the soft symbols and channel information, the transmit power calculation device **76** controls the receiving station's transmission power level by controlling the gain of an amplifier **54.**

For use in estimating the pathloss between the receiving and transmitting stations **110,112** and sending data, the receiving station **110** sends a communication to the transmitting station **112, step 41**. The communication may be sent on any one of the various channels. Typically, in a TDD system, the channels used for estimating pathloss are referred to as reference channels, although other channels may be used. If the receiving station **110** is a base station **$30_1$**, the communication is preferably sent over a downlink common channel or a common control physical channel (CCPCH). Data to be communicated to the transmitting station **112** over the reference channel is referred to as reference channel data. The reference data may include, as shown, the interference level, $I_{RS}$, multiplexed with other reference data, such as the transmission power level, $T_{RS}$. The interference level, $I_{RS}$, and reference channel power level, $I_{RS}$, may be sent in other channels, such as a signaling channel.

The reference channel data is generated by a reference channel data generator **56.** The reference data is assigned one or multiple resource units based on the communication's bandwidth requirements. A spreading and training sequence insertion device **58** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier **60.** The amplified communication burst may be summed by a sum device **62** with any other communication burst created through devices, such as a data generator **50,** spreading and training sequence insertion device **52** and amplifier **54.**

The summed communication bursts are modulated by a modulator **64.** The modulated signal is passed thorough an isolator **66** and radiated by an antenna **78** as shown or, alternately, through an antenna array. The radiated signal is passed through a wireless radio channel **80** to an antenna **82** of the transmitting station **112.** The type of modulation used for the transmitted communication can be any of those known to those skilled in the art, such as direct phase shift keying (DPSK) or quadrature phase shift keying (QPSK).

The antenna **82** or, alternately, antenna array of the transmitting station **112** receives various radio frequency signals including the target adjustments. The received signals are passed through an isolator **84** to a demodulator **86** to produce a baseband signal. The baseband signal is processed, such as by a channel estimation device **88** and a data estimation device **90,** in the time slots and with the appropriate codes assigned to the communication burst of the receiving station **110.** The channel estimation device **88** commonly uses the training sequence component in the baseband signal to provide channel information, such as channel impulse responses. The channel information is used by the data estimation device **90** and a power measurement device **92.**

The power level of the processed communication corresponding to the reference channel, $R_{TS}$, is measured by the power measurement device **92** and sent to a pathloss estimation device **94, step 42.** Both the channel estimation device **88** and the data estimation device **90** are capable of separating the reference channel from all other channels. If an automatic gain control device or amplifier is used for processing the received signals, the measured power level is adjusted to correct for the gain of these devices at either the power measurement device **92** or pathloss estimation device **94.** The power measurement device is a component of an outer loop/weighted open loop controller **100.** As shown in **Figure 4,** the outer loop/weighted open loop controller **100** comprises the power measurement device **92,** pathloss estimation device **94,** quality measurement device **94,** target update device **101,** and transmit power calculation device **98**.

To determine the path loss, L, the transmitting station **112** also requires the communication's transmitted power level, $T_{RS}$. The communication's transmitted power level, $T_{RS}$, may be sent along with the communication's data or in a signaling channel. If the power level, $T_{RS}$, is sent along with the communication's data, the data estimation device **90** interprets the power level and sends the interpreted power level to the pathloss estimation device **94.** If the receiving station **110** is a base station **$30_1$**, preferably the transmitted power level, $T_{RS}$, is sent via the broadcast channel (BCH) from the base station **$30_1$**. By subtracting the received communication's power level, $R_{TS}$, from the sent communication's transmitted power level, $T_{RS}$, the pathloss estimation device **94** estimates the path loss, L, between the two stations **110,112, step 43.** Additionally, a long term average of the pathloss, $L_0$, is updated, **step 44.** The long term average of the pathloss, $L_0$, is an average of the pathloss estimates. In certain situations, instead of transmitting the transmitted power level, $T_{RS}$, the receiving station **110** may transmit a reference for the transmitted power level. In that case, the pathloss estimation device **94** provides reference levels for the pathloss, L.

Since TDD systems transmit downlink and uplink communications in the same frequency spectrum, the conditions these communications experience are similar. This phenomenon is referred to as reciprocity. Due to reciprocity, the path loss experienced for the downlink will also be experienced for the uplink and vice versa. By adding the estimated path loss to a target level, a transmission power level for a communication from the transmitting station **112** to the receiving station **110** is determined.

If a time delay exists between the estimated path loss and the transmitted communication, the path loss experienced by the transmitted communication may differ from the calculated loss. In TDD where communications are sent in differing time slots $36_1$-$36_n$, the time slot delay between received and transmitted communications may degrade the performance of an open loop power control system. To overcome these drawbacks, weighted open loop power control determines the quality of the estimated path loss using a quality measurement device **96, step 45,** and weights the estimated path loss accordingly, L, and long term average of the pathloss, $L_0$.

To enhance performance further in outer loop/weighted open loop, a target level is adjusted. A processor **103** converts the soft symbols produced by the data estimation device **90** to bits and extracts the target adjustment information, such as a $SIR_{TARGET}$ adjustment. A target update device **101** adjusts the target level using the target adjustments, step **46**. The target level may be a $SIR_{TARGET}$ or a target received power level at the receiving station **110**.

The transmit power calculation device **98** combines the adjusted target level with the weighted path loss estimate, L, and long term average of the pathloss estimate, $L_0$, to determine the transmission power level of the transmitting station, **step 47**.

Data to be transmitted in a communication from the transmitting station **112** is produced by data generator **102**. The data is error detection/correction encoded by error detection/correction encoder **110**. The error encoded data is spread and time-multiplexed with a training sequence by the training sequence insertion device **104** in the appropriate time slots and codes of the assigned resource units producing a communication burst. The spread signal is amplified by an amplifier **106** and modulated by modulator **108** to radio frequency. The gain of the amplifier is controlled by the transmit power calculation device **98** to achieve the determined transmission power level. The power controlled communication burst is passed through the isolator **84** and radiated by the antenna **82**.

The following is one outer loop/weighted open loop power control algorithm. The transmitting stations's transmission power level in decibels, $P_{TS}$, is determined using **Equation 2.**

$$P_{TS} = SIR_{TARGET} + I_{RS} + \alpha(L\text{-}L_0) + L_0 + \text{CONSTANT VALUE} \qquad \text{Equation 2}$$

The $SIR_{TARGET}$ has an adjusted value based on the received target adjustment signals. For the downlink, the initial value of $SIR_{TARGET}$ is known at the transmitting station **112.** For uplink power control, $SIR_{TARGET}$ is signaled from the receiving station **110** to the transmitting station **112**. Additionally, a maximum and minimum value for an adjusted $SIR_{TARGET}$ may also be signaled. The adjusted $SIR_{TARGET}$ is limited to the maximum and minimum values. $I_{RS}$ is the measure of the interference power level at the receiving station **110.**

L is the path loss estimate in decibels, $T_{RS}$ - $R_{TS}$, for the most recent time slot $36_1$-$36_n$ that the path loss was estimated. $L_0$, the long term average of the path loss in decibels, is the running average of the pathloss estimate, L. The CONSTANT VALUE is a correction term. The CONSTANT VALUE corrects for differences in the uplink and downlink channels, such as to compensate for differences in uplink and downlink gain. Additionally, the CONSTANT VALUE may provide correction if the transmit power reference level of the receiving station is transmitted, instead of the actual transmit power, $T_{RS}$. If the receiving station **110** is a base station, the CONSTANT VALUE is preferably sent via a Layer 3 message.

The weighting value, $\alpha$, is a measure of the quality of the estimated path loss and is, preferably, based on the number of time slots $36_1$-$36_n$ between the time slot, n, of the last path loss estimate and the first time slot of the communication transmitted by the transmitting station **112**. The value of $\alpha$ is between zero and one. Generally, if the time difference between the time slots is small, the recent path loss estimate will be fairly accurate and $\alpha$ is set at a value close to one. By contrast, if the time difference is large, the path loss estimate may not be accurate and the long term average path loss measurement is most likely a better estimate for the path loss. Accordingly, $\alpha$ is set at a value closer to one.

**Equations 3** and **4** are equations for determining $\alpha$.

$$\alpha = 1 - (D - 1)/(D_{max}\text{-}1) \qquad \text{Equation 3}$$

$$\alpha = \max \{1\text{-}(D\text{-}1)/(D_{max\text{ - }allowed} - 1), 0\} \qquad \text{Equation 4}$$

The value, D, is the number of time slots $36_1$-$36_n$ between the time slot of the last path loss estimate and the first time slot of the transmitted communication which will be referred to as the time slot delay. If the delay is one time slot, $\alpha$ is one. $D_{max}$ is the maximum possible delay. A typical value for a frame having fifteen time slots is seven. If the delay is $D_{max}$, $\alpha$ is zero $D_{max-allowed}$ is the maximum allowed time slot delay for using open loop power control. If the delay exceeds $D_{max-allowed}$, open loop power control is effectively turned off by setting a = 0. Using the transmit power level, $P_{TS}$, determined by a transmit power calculation device **98** the transmit power of the transmitted communication is set.

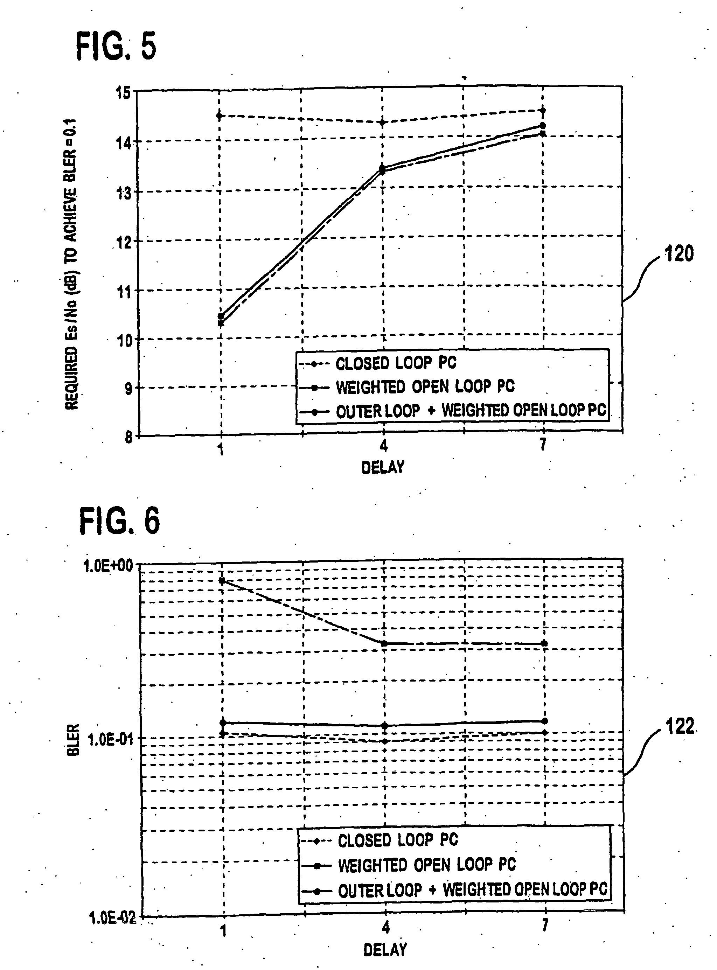

**Figures 5** and **6** compare the performance of the weighted outer loop/open loop, open loop and closed loop systems. The simulations in **Figures 5** and **6** were performed for a slightly different version of the outer loop/weighted open loop algorithm. In this version, the target SIR is updated every block. A $SIR_{TARGET}$ is increased if a block error was detected and decreased if no block error was detected. The outer loop/weighted open loop system used **Equation 2. Equation 3** was used to calculate $\alpha$. The simulations compared the performance of the systems controlling a UE's $32_1$ transmission power level. For the simulations, 16 CRC bits were padded every block. In the simulation, each block was 4 frames. A block error was declared when at least two raw bit errors occur over a block. The uplink communication channel is assigned one time slot per frame. The target for the block error rate is 10%. The $SIR_{TARGER}$ is updated every 4 frames. The simulations address the performance of these systems for a UE $32_1$ traveling at 30 kilometers per hour. The simulated base station used two antenna diversity for reception with each antenna having a three finger RAKE receiver. The simulation approximated a realistic channel and SIR estimation based on a midamble sequence of burst type 1 field in the presence of additive white Gaussian noise (AWGN). The simulation used an International Telecommunication Union (ITU) Pedestrian B type channel and QPSK modulation. Interference levels were assumed to have no uncertainty. Channel coding schemes were not considered. $L_0$ was set at 0 db.

Graph **120** of **Figure 5** shows the performance as expected in terms of the required $E_s/N_o$ for a BLER of $10^{-1}$ as a function of time delay between the uplink time slot and the most recent downlink time slot. The delay is expressed by the number of time slots. $E_s$ is the energy of the complex symbol. **Figure 5** demonstrates that, when gain/interference uncertainties are ignored, the performance of the combined system is almost identical to that of weighted open loop system. The combined system outperforms the closed loop system for all delays.

In the presence of gain and interference uncertainties, the transmitted power level of the open loop system is either too high or too low of the nominal value. In graph **122** of **Figure 6,** a gain uncertainty of -2 dB was used. **Figure 6** shows the BLER as a function of the delay. The initial reference $SIR_{TARGET}$ for each system was set to its corresponding nominal value obtained from **Figure 5,** in order to achieve a BLER of $10^{-1}$. **Figure 6** shows that, in the presence of gain uncertainty, both the combined and closed loop systems achieve the desired BLER. The performance of the weighted open loop system severely degrades.

**Claims**

1. A spread spectrum time division duplex user equipment communicating using frames with time slots for communication, the user equipment comprising:

   means (82, 88) for receiving, in a first time slot, a first communication having a transmit power level and for receiving the transmit power level, an interference level and target adjustments from a base station;
   means (92) for measuring a power level of said first communication;
   means (94) for determining a path loss estimate based in part on said measured power level and said transmit power level of said first communication;
   means (108, 82) for transmitting a second communication in a second time slot at a set transmission power level to the base station; the user equipment being **characterized in that** it comprises:

   means (101) for updating a target signal to interference ratio based on the received target adjustments;
   means (96, 98, 106) for setting the transmission power level for transmission of the second communication in the second time slot by adding the path loss estimate weighted by a first factor $\alpha$, having a value between zero and one, and a long term path loss estimate weighted by a second factor (1- $\alpha$) to the interference level, to the updated target signal to interference ratio and to a constant value, a being a quality of the determined path loss estimate.

2. The user equipment of claim 1 further comprising:

   means (94) for determining the long term path loss estimate based at least in part upon an average of path loss estimates of communications received by the user equipment.

3. The user equipment of claim 2 further comprising:

    means (96) for determining the quality, a, of the path loss estimate which is based in part on a number of slots, D, between the first and second time slot.

4. The user equipment of claim 3, wherein a maximum time slot delay is $D_{max}$ and a is determined by:

$$\alpha = 1 - (D - 1)/(D_{max} - 1).$$

5. The user equipment of claim 3,wherein maximum allowed time slot delay is $D_{max\text{-}allowed}$ and the determined quality, a, is determined by:

$$\alpha = \max \{1-(D-1)/(D_{max\text{-}allowed}-1), 0\}.$$

**Patentansprüche**

1. Spreizspektrum-Zeitduplex-Teilnehmergerät, das unter Verwendung von Rahmen mit Zeitschlitzen für die Kommunikation kommuniziert, wobei das Teilnehmergerät aufweist:

    Einrichtungen (82, 88) zum Empfangen, in einem ersten Zeitschlitz, einer' ersten Kommunikation mit einem Sendeleistungspegel und zum Empfangen des Sendeleistungspegels, eines Störpegels und von Zielausrichtungen von einer Basisstation und
Einrichtungen (92) zum Messen eines Leistungspegels der ersten Kommunikation;
eine Einrichtung (94) zur Bestimmung einer Pfaddämpfungsschätzung teilweise auf der Basis des gemessenen Leistungspegels und des Sendeleistungspegels der ersten Kommunikation;
Einrichtungen (108, 82) zum Senden einer zweiten Kommunikation in einem zweiten Zeitschlitz mit einem eingestellten Sendeleistungspegel an die Basisstation;

    wobei das Teilnehmergerät **dadurch gekennzeichnet ist, daß** es aufweist:

    eine Einrichtung (101) zum Aktualisieren eines Zielsignals-Störverhältnisses auf der Basis der empfangenen Zielausrichtungen;
Einrichtungen (96, 98, 106) zum Einstellen des Sendeleistungspegels für das Senden der zweiten Kommunikation in dem zweiten Zeitschlitz durch Addieren der mit einem ersten Faktor $\alpha$ mit einem Wert zwischen null und eins gewichteten Pfaddämpfungsschätzung und einer mit einem zweiten Faktor (1 - a) gewichteten Langzeit-Pfaddämpfungsschätzung zu dem Störpegel, zu dem aktualisierten Zielsignal-Störverhältnis und zu einem konstanten Wert, wobei $\alpha$ eine Qualität der bestimmten Pfaddämpfungsschätzung ist.

2. Teilnehmergerät nach Anspruch 1, das ferner aufweist:

    eine Einrichtung (94) zum Bestimmen der Langzeit-Pfaddämpfungsschätzung zumindest teilweise auf der Basis eines Mittels der Pfaddämpfungsschätzungen für Kommunikationen, die von dem Teilnehmergerät empfangen werden.

3. Teilnehmergerät nach Anspruch 2, das ferner aufweist:

    eine Einrichtung (96) zum Bestimmen der Qualität $\alpha$ der Pfaddämpfungsschätzung, die teilweise auf einer Anzahl von Schlitzen D zwischen dem ersten und zweiten Zeitschlitz basiert.

4. Teilnehmergerät nach Anspruch 3, wobei eine maximale Zeitschlitzverzögerung $D_{max}$ ist und $\alpha$ bestimmt wird durch:

$$\alpha = 1 - (D - 1)/(D_{max} - 1).$$

**5.** Teilnehmergerät nach Anspruch 3, wobei eine maximal zulässige Zeitschlitzverzögerung $D_{max-zulässig}$ ist und die bestimmte Qualität $\alpha$ bestimmt wird durch:

$$\alpha = \max\{1 - (D - 1)/(D_{max-zulässig} -1), 0\}.$$

**Revendications**

**1.** Matériel d'utilisateur pour duplex à répartition dans le temps et à étalement du spectre communicant en utilisant des trames avec des intervalles de temps pour la communication, le matériel d'utilisateur comprenant :

des moyens (82, 88) permettant de recevoir, dans un premier intervalle de temps, une première communication ayant un niveau de puissance d'émission et pour recevoir le niveau de puissance d'émission, un niveau d'interférence et des réglages cibles depuis une station de base ;

un moyen (92) permettant de mesurer un niveau de puissance de ladite première communication ;

un moyen (94) permettant de déterminer une estimation de perte sur le trajet basée en partie sur ledit niveau de puissance mesuré et ledit niveau de puissance d'émission de ladite première communication ;

des moyens (108, 82) permettant d'émettre une seconde communication dans un second intervalle de temps avec un niveau de puissance d'émission défini, vers la station de base ;

le matériel d'utilisateur étant **caractérisé en ce qu'**il comprend :

un moyen (101) permettant de mettre à jour un rapport signal cible sur interférence, basé sur les réglages cibles reçus ;

des moyens (96, 98, 106) permettant de définir le niveau de puissance d'émission permettant l'émission de la seconde communication dans le second intervalle de temps en ajoutant l'estimation de perte sur le trajet pondérée par un premier facteur $\alpha$ ayant une valeur comprise entre zéro et un, et une

estimation de perte sur le trajet à long terme pondérée par un second facteur (1 - a) au niveau d'interférence, au rapport signal cible sur interférence mis à jour et à une valeur constante, $\alpha$ étant une qualité de l'estimation de perte sur le trajet déterminée.

**2.** Matériel d'utilisateur selon la revendication 1, comprenant en outre :

un moyen (94) permettant de déterminer l'estimation de perte sur le trajet, à long terme, basée, au moins en partie sur une moyenne des estimations de perte sur le trajet des communications reçues par le matériel d'utilisateur.

**3.** Matériel d'utilisateur selon la revendication 2, comprenant en outre :

un moyen (96) permettant de déterminer la qualité, a, de l'estimation de perte sur le trajet, qui est basée en partie sur un certain nombre d'intervalles, D, entre les premier et second intervalles de temps.

**4.** Matériel d'équipement selon la revendication 3, dans lequel un retard d'intervalle maximum de temps est $D_{max}$ et $\alpha$ est déterminé par : $\alpha = 1 - (D-1)/(D_{max}-1)$

**5.** Matériel d'équipement selon la revendication 3, dans lequel un retard d'intervalle de temps lhaximum permis est $D_{max-allowed}$ et la qualité déterminée a est déterminée par : $\alpha = \max\{1 - (D-1)/(D_{max-allowed}-1), 0\}$.

FIG. 1

FIG. 2

EP 1 367 740 B1

$36_1$ $36_2$ $\cdots$ $36_n$ $36_1$ $36_2$ $\cdots$ $36_n$ $36_1$ $36_2$ $\cdots$ $36_n$

34  34  34

TIME

# FIG. 3

RECEIVING STATION RECEIVES A COMMUNICATION
FROM THE TRANSMITTING STATION — 38

DETERMINING AN ERROR RATE ASSOCIATED WITH THE
COMMUNICATION FROM THE TRANSMITTING STATION — 39

DETERMINING IF AN ADJUSTMENT IN A TARGET LEVEL IS
NEEDED AND DETERMINE THE ADJUSTMENT LEVEL — 40

TRANSMITTING TARGET ADJUSTMENTS AS NEEDED AND
A COMMUNICATION TO THE TRANSMITTING STATION — 41

DETERMINING THE RECEIVED POWER LEVEL OF THE
COMMUNICATION FROM THE RECEIVING STATION AS
RECEIVED AT THE TRANSMITTING STATION — 42

DETERMINE AN ESTIMATED PATH LOSS BETWEEN THE
RECEIVING AND TRANSMITTING STATION BY
SUBTRACTING THE RECEIVED COMMUNICATION'S POWER
LEVEL IN dB FROM THE COMMUNICATION'S
TRANSMISSION POWER LEVEL IN dB — 43

UPDATE A LONG TERM PATH LOSS ESTIMATE — 44

DETERMINE THE QUALITY OF THE ESTIMATED PATH LOSS — 45

RECEIVING THE TARGET ADJUSTMENT SIGNAL AND
ADJUSTING THE TARGET LEVEL — 46

SET THE TRANSMITTING STATION'S TRANSMISSION
POWER LEVEL USING THE ESTIMATED PATH LOSS
AND LONG TERM AVERAGE OF THE PATH LOSS
WEIGHTED BY THE ESTIMATE'S QUALITY AND THE
RECEIVED TARGET ADJUSTMENTS — 47

FIG. 4

EP 1 367 740 B1

## FIG. 5

## FIG. 6